# EUROPEAN PATENT SPECIFICATION

(11) **EP 0 236 064 B1**
(45) Date of publication and mention of the grant of the patent: **21.04.1993**
(21) Application number: 87301649.7
(22) Date of filing: 25.02.1987
(51) Int. Cl.: H04N 3/233, H04N 3/23

(54) **Pincushion correction in deflection circuit**
Kissenverzerrungskorrektion in Ablenkschaltungen
Correction de distorsion en coussin dans circuit de déflection

(30) Priority: 27.02.1986 GB 8604865; 18.06.1986 US 875708
(43) Date of publication of application: 09.09.1987
(73) Proprietor: RCA Thomson Licensing Corporation, Princeton, NJ 08540 (US)
(72) Inventor: Haferl, Peter Eduard, CH-8134 Adliswil (CH)
(74) Representative: Pratt, Richard Wilson

(56) References cited:
- DE-A- 3 442 818
- GB-A- 2 150 796
- GB-A- 2 168 559

## Description

This invention relates to a deflection circuit in which the "S"-shaping of the deflection current may be varied or modulated over a relatively wide range for obtaining inside pincushion distortion correction.

Color television picture tubes with a faceplate radius R greater than 1, such as, for example, Philips 45AX picture tube in which R is equal to 1.6, may require a significantly high amount of inside pincushion correction, which makes an adjustment for inside pincushion desirable.

Some prior art raster correction circuits provide inside pincushion correction by utilizing a modulation inductor serially coupled with the deflection winding. Such a circuit is disclosed in DE-A-34 42 818 (corresponding to GB-A-2 15 1118). The modulation inductor increases the total deflection inductive impedance. In particular, at line frequencies higher than 1xf_{H}, where f_{H} is the horizontal frequency in, for example, PAL standard, more deflection power is dissipated and a higher retrace voltage pulse appears across the deflection switch because of the increased inductive impedance. It is, therefore, desirable to provide inside East-West raster correction without utilizing such a modulation inductor.

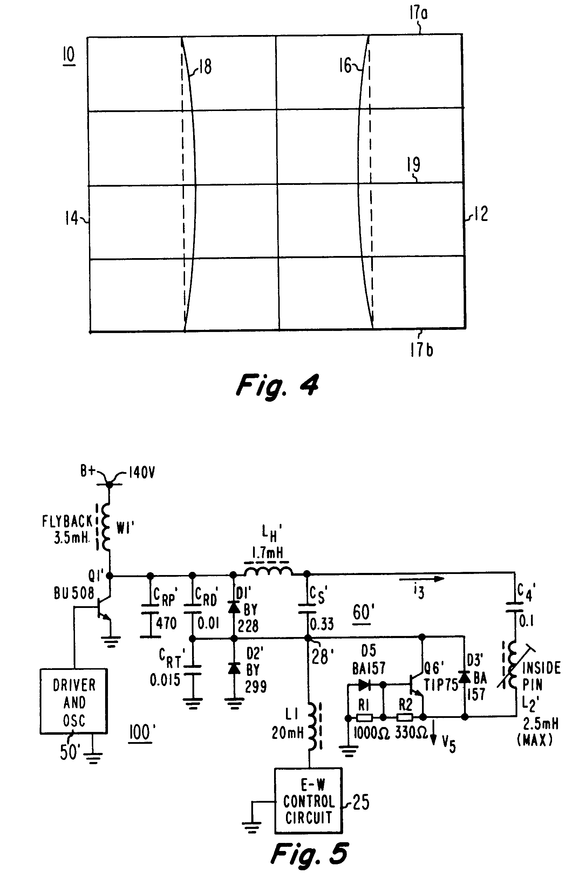

FIGURE 4 illustrates inside pincushion distortion as it appears on a television raster displaying a crosshatch line pattern indicated generally by 10. The right and left sides of the crosshatch pattern are defined by vertical lines 12 and 14. Lines 12 and 14 are straight, indicating that the raster is East-West outside pincushion corrected. Vertical grid lines 16 and 18, lying between the center and the sides of the raster, are curved, as indicated by their departure from the straight dotted lines, indicating the presence of inside pincushion distortion. Horizontal lines 17a and 17b illustrate the horizontal scanning position for a top or a bottom raster scanning example; whereas horizontal line 19 illustrates the horizontal scanning position for a center raster scanning example.

The correction of the inside pincushion distortion requires a modulation of the "S"-shaping of the deflection current during horizontal trace along the vertical scanning axis. It may be desirable to increase the "S"-shaping from top to the center of the raster and to decrease the "S"-shaping from the center to the bottom of the raster to obtain straight vertical lines such as shown by the dotted lines in FIGURE 4.

In accordance with an aspect of the invention, a deflection apparatus, with inside pincushion distortion correction includes a deflection winding, generates scanning current at a deflection rate in the deflection winding during a trace interval and during a retrace interval of a deflection cycle. Switching means coupled to the deflection winding generates, during the retrace interval, a retrace voltage, and also generates the scanning current. A modulated voltage is generated during the retrace interval. The modulated voltage is modulated in accordance with a modulation signal at a second frequency. A trace capacitance coupled to the deflection winding forms with the deflection winding a first trace resonant circuit during the trace interval such that the scanning current that flows in the trace capacitance develops, during the trace interval, a parabolic voltage in the trace capacitance. A circuit branch, including a second capacitance and a modulation inductance, is coupled to the trace capacitance and forms, with the trace capacitance, a second resonant circuit for generating in the modulation inductance a modulation current at an amplitude that is modulated by the modulated voltage during the retrace interval. The modulation current is coupled to the trace capacitance to vary the parabolic voltage in the trace capacitance in accordance with the amplitude of the parabolic voltage in a manner to reduce inside pincushion distortion. The trace capacitance acts as a low impedance bypass capacitance for the scanning current around the modulation inductance substantially through the retrace interval.

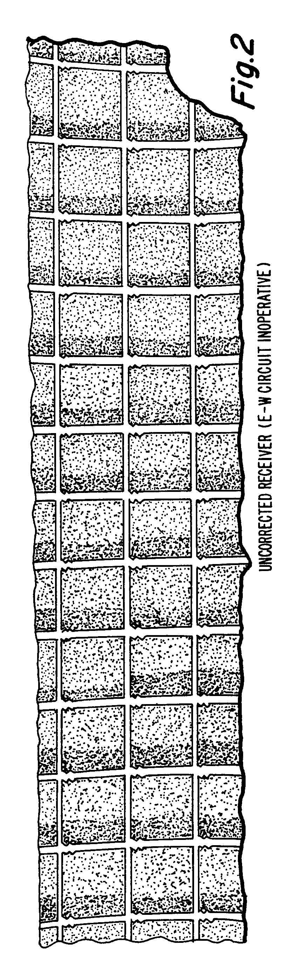

The horizontal deflection circuit, in some conventional television receivers, comprises an output stage that includes a horizontal deflection winding and a trace capacitance that supplies deflection current to the deflection winding during each trace interval. A retrace capacitance is coupled across the deflection winding during the retrace interval. Energy is replenished during retrace via a flyback transformer. High beam current in a secondary winding of the flyback transformer, that occurs in the course of displaying, for example, each white horizontal strip of a crosshatch pattern such as shown in FIGURE 2, represents a heavy ultor load to the flyback transformer during retrace. The retrace capacitance is slightly discharged during retrace due to this loading. This results in a discharge current from the trace capacitance into the retrace capacitance through the deflection winding and a slight drop of the voltage across the trace capacitance during the white horizontal strips of the crosshatch pattern. The charge of the trace capacitance is replenished during the retrace intervals associated with the scan lines that display the black picture portion between the white crosshatch stripes. This causes a small current in the opposite direction through the deflection winding. The charge and discharge current of the trace capacitance produces a small raster displacement and results in low frequency oscillations modulating the deflection winding trace current. This low frequency modulation may cause each vertical strip of the crosshatch pattern to appear as being of a zig-zag shape, instead of a straight line shape. The zig-zag shape appears in a given vertical strip immediately below the intersection point with a horizontal strip. Such distortions, that are sometimes referred to by the name "mouseteeth" distortions, are illustrated in the crosshatch pattern of FIGURE 2. They appear during and just after the times in which high beam transients occur because the deflection circuit, which represents a low impedance energy flywheel, supplies the transient increase in energy requirement of the ultor circuits. Thus, energy transferred from the deflection circuit to the ultor circuits may tend to cause variations in the deflection winding trace current. It may be desirable to reduce such "mouseteeth" distortion.

In accordance with another aspect of the invention, the deflection current amplitude is modulated for obtaining inside and outside pincushion distortion correction without substantially affecting the high voltage amplitude or the deflection retrace time, and in such a way that "mouseteeth" distortion is reduced.

In the Drawing:
FIGURE 1 illustrates a deflection circuit with inside and outside pincushion distortion correction embodying an aspect of the invention;
FIGURE 2 illustrates a crosshatch pattern in which "mouseteeth" distortion is uncorrected;
FIGURES 3a-3i illustrate waveforms useful in explaining the operation of the circuit of FIGURE 1;
FIGURE 4 illustrates a crosshatch pattern in which the inside pincushion distortion is uncorrected;
FIGURE 5 illustrates a second embodiment of the invention;
FIGURE 6 illustrates additional waveforms useful in explaining the operation of the circuit of FIGURE 1; and
FIGURE 7 illustrates a third embodiment of the invention that includes a diode modulator.

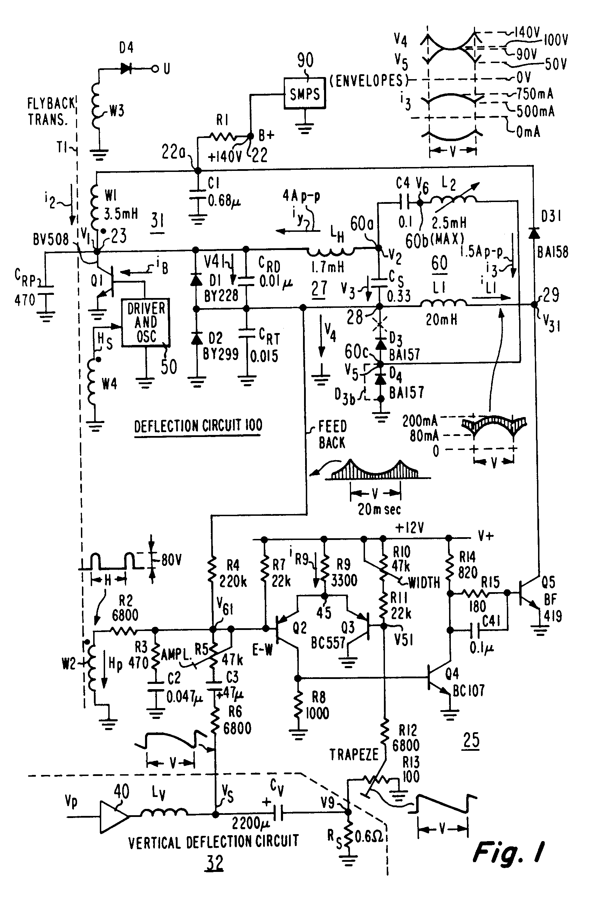

Deflection circuit 100 of FIGURE 1, embodying an aspect of the invention, may provide horizontal deflection of the electron beams in, for example, a Philips 110° 45AX FS color picture tube type A66-EAK00X01. In FIGURE 1, a source of regulated direct current voltage B+, developed between a terminal 22 and ground, is coupled through a small-valued resistor R1 to a terminal 22a of a primary winding W1 of a horizontal flyback transformer T1. The other terminal of winding W1 is coupled to a junction terminal 23. A filtering capacitance C1 is coupled from terminal 22a to ground. Regulated voltage B+ is generated, for example, by a switched mode power supply 90. A secondary winding W3 of transformer T1, supplies an ultor voltage U through a diode D4.

A horizontal output transistor Q1, having its base coupled to a conventional driver and oscillator circuit 50, has its collector to emitter path coupled between junction terminal 23 and ground. Paralleling transistor Q1 is the series arrangement of two rectifiers, diodes D1 and D2. Coupled between the anode and cathode electrodes of diode D1 is an arrangement of a horizontal deflection winding L_{H} that is coupled to an S-shaping, or trace, capacitance Cₛ. A deflection retrace capacitance C_{RD}, coupled also between the anode and cathode electrodes of diode D1, forms with deflection winding L_{H}, a parallel retrace resonant circuit 27. A second retrace capacitance C_{RT} is coupled between a junction terminal 28 and ground. A small-valued capacitance C_{RP} is coupled between terminal 23 and ground. Capacitor C_{RP} provides fine tuning of the resonance frequency of retrace resonant circuit 27. Coupled between a terminal 28 and ground, is a series arrangement of a choke L1, and a controllable East-West switched current arrangement 25 that includes a switching transistor Q5 and a diode D31. The inductance of choke L1 is substantially higher than that of deflection winding L_{H}.

Embodying an aspect of the invention, an inside pincushion distortion correction circuit 60 includes a capacitance C₄ that is coupled between a terminal 60b and a terminal 60a, the junction of capacitance Cₛ and deflection winding L_{H}. A variable inductor L₂ of circuit 60 is coupled between terminal 60b and a terminal 60c, the junction of diodes D₃ and D₄. The anode of a diode D₄ is coupled to ground. The cathode of diode D₄ is coupled to terminal 60c. A diode D₃ is coupled between terminal 60c and terminal 28.

During the first half of trace, deflection current i_{y} flows, in a direction opposing the arrow, in deflection winding L_{H} and in diode D1. During the second half of trace, deflection current i_{y} flows in deflection winding L_{H}, in the direction of the arrow, and in transistor Q1 that is conductive. At the end of trace, transistor Q1 becomes nonconductive and a retrace voltage V₁ is developed, in a conventional manner, between terminal 23 and ground.

During the retrace interval, charge is taken away from retrace capacitance C_{RD} by modulated sink current i_{L1} that flows via choke L₁. The higher the integral, ∫i_{L1}dt, during the entire retrace interval, for example, the larger becomes a voltage V41 across capacitance C_{RD} and the smaller becomes a voltage V₄ across capacitance C_{RT}. The peak of deflection current i_{y} through deflection winding L_{H}, during the trace interval, is directly related to the peak of voltage V41 across capacitance C_{RD} at the center of the retrace interval. By modulating current i_{L1} at a vertical rate, switched current arrangement 25 provides outside pincushion correction to horizontal scanning current i_{y}.

Controllable switched current arrangement 25 includes a differential pair of transistors Q2 and Q3, where both emitters of transistors Q2 and Q3 are coupled to a terminal 45 of a resistor R9. The other terminal of resistor R9 is coupled to a voltage source V+. Current i_{R9}, flowing in resistor R9, is split between transistors Q2 and Q3, respectively, in response to the difference voltage V61-V51 developed between the bases of transistors Q2 and Q3, respectively.

The collector current of transistor Q2 controls, via an inverting and driving transistor Q4, a switching transistor Q5 of arrangement 25 that operates in common emitter mode. The collector of transistor Q5 is coupled to a terminal 29 of choke L1 that is remote from retrace resonant circuit 27. Thus, transistor Q5 is switched off and on, respectively, in accordance with the amplitude of the difference voltage V61-V51. Terminal 29 of choke L1 is also coupled through a diode D31 of switched current arrangement 25 to terminal 22a that is at approximately the potential of voltage B+. Diode D31 is poled to divert current i_{L1} that flows through choke L1, and to clamp voltage V31 at terminal 29, when transistor Q5 is turned off, to the voltage that is present across capacitance C1. Conversely, when transistor Q5 is turned on, current i_{L1} flows to ground through transistor Q5 causing voltage V31 to be at approximately ground potential.

Horizontal retrace pulses Hₚ, developed across a secondary winding W2 of flyback transformer T1, are coupled to the base of transistor Q2 through a resistor R2 and across a series arrangement of a resistor R3 and a capacitance C2. A vertical rate signal Vₛ, having a parabolic shape superimposed on a vertical sawtooth that is produced by a conventional vertical deflection circuit 32, is coupled to the base of transistor Q2 through a raster control arrangement of series resistors R6, R5 and capacitance C3. Thus, the base of transistor Q2 acts as a voltage summing junction. Vertical sawtooth voltage V9 across a sampling resistor R_{S} of vertical deflection circuit 32 has a vertical rate sawtooth component. Voltage V9 is applied through a trapeze control resistor R13, that is in parallel with resistor R_{S}, to one terminal of a resistor R12. The other terminal of resistor R12 is coupled to the base of transistor Q3. Trapeze control resistor R13 is adjusted to cancel, by common mode rejection, the vertical sawtooth portion at the base of transistor Q2. Bias voltage V51, at the base of transistor Q3, is controlled by a series arrangement of a variable resistor R10 and a fixed resistor R11. The series arrangement of resistors R10 and R11 is interposed between voltage source V+ and the base of transistor Q3.

Voltage V₄ between terminal 28 of choke L1 and ground is also coupled through a resistor R4 to the base of transistor Q2 to provide feedback that stabilizes the operation of switched current arrangement 25. Thus, capacitance C2, coupled to the base of transistor Q2, integrates the pulses of voltage V₄ to provide a vertical rate parabolic waveform feedback.

The difference voltage V61-V51 at the bases of transistors Q2 and Q3, respectively, modulates the time in which transistor Q5 is turned off during each horizontal trace interval in accordance with the vertical position of the scanning beam in the cathode ray tube screen.

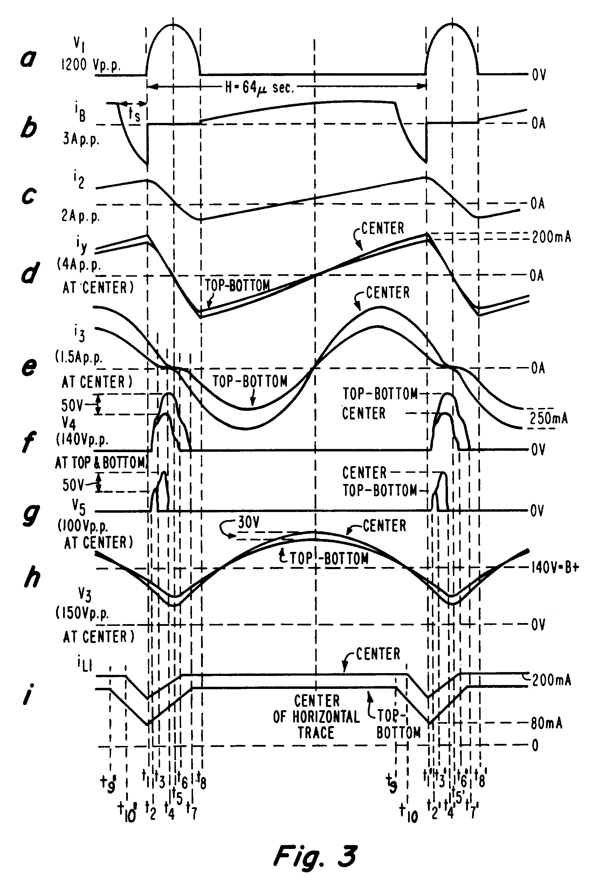

FIGURES 3a-3i illustrate waveforms useful in explaining the operation of deflection circuit 100 of FIGURE 1. Similar numbers and symbols in FIGURES 1 and 3a-3i indicate similar items.

Current i_{L1} of FIGURE 1 flows during each horizontal scanning trace interval through diode D2, choke L₁ and transistor Q5 to ground until transistor Q5 is turned off at a controllable time. When scanning occurs at the top or bottom of the raster, transistor Q5 is turned off at time t₉ of FIGURE 3i that illustrates the waveform of current i_{L1} of FIGURE 1. On the other hand, at the center of the raster, it is turned off at a later time t₁₀ of FIGURE 3i. When transistor Q5 of FIGURE 1 is turned off, current i_{L1} is diverted from transistor Q5 to flow through diode D31. This produces a decay of current i_{L1} during the remainder of the trace interval. During the retrace interval, current i_{L1} increases, as illustrated, for example, during interval t₁-t₇ of FIGURE 3i for the top or bottom scanning example. Because of the high impedance of choke L1 relative to that of deflection winding L_{H} during retrace, no significant coupling is produced between retrace resonant circuit 27 and primary winding W1 for high frequency load related currents in the primary winding. During retrace, capacitor C_{RT} that is not bypassed by circuit 60, provides loose, or low, coupling between transformer T1 and trace capacitor Cₛ. Such loose coupling prevents the discharge of capacitor Cₛ by the current that flows in high voltage winding W3 of transformer T1. Because of such loose coupling and because choke L1 does not provide a low impedance path for load related currents in winding W1, "mouseteeth" distortions are, advantageously, avoided or significantly reduced. "Mouseteeth" distortions are avoided or significantly reduced in a similar way to that described in detail in U.S. Patent Application No. 651,301, in the name of P.E. Haferl, entitled EAST-WEST CORRECTION CIRCUIT, corresponding to UK Published Application GB-A-2150796, published 3 July 1985.

Embodying a feature of the invention, correction of inside pincushion distortion is accomplished by the "S"-shaping of deflection current i_{y}, in accordance with current i₃ that flows in capacitance C₄ and in inductor L₂ of inside pincushion distortion correction circuit 60. Current i₃, that flows as a current component in trace capacitance Cₛ, varies voltage V₃ across capacitance Cₛ, during trace, at a frequency that is higher than the trace resonance frequency of the trace resonance circuit of deflection winding L_{H} and trace capacitance Cₛ. Such trace resonance frequency is, for example, equal to approximately 7KHz. The amplitude of current i₃ is modulated by voltage V₄ at terminal 28. The higher is the amplitude of current i₃, the higher is the peak-to-peak amplitude of voltage V₃ that is produced and the more significant is the amount of "S"-shaping of deflection current i_{y} that is provided, and vice versa.

Embodying yet another aspect of the invention, capacitance C₄ and variable inductor L₂ of circuit 60 form with trace capacitance Cₛ and deflection winding L_{H} a resonance circuit portion of correction circuit 60 during trace. The resonance circuit portion of circuit 60 is tuned by inductor L₂ to a frequency that is equal to or lower than frequency f_{H}, but substantially higher than the resonance frequency of the trace resonant circuit of deflection winding L_{H} and trace capacitance Cₛ. For the circuit values shown in FIGURE 1, inductor L₂ may typically be adjusted to tune the resonance circuit portion of circuit 60 to a frequency of 14 KHz. By adjusting such resonance frequency, the amplitude of current i₃ is controlled. The value of the inductance of inductor L2 may be, preferably, sufficiently large so as to avoid "mouseteeth" distortion.

Resonance current i₃ in, for example, capacitance C₄ is generated by voltage V₃. The portion of voltage V₃ that is caused by current i_{y} is generally a parabola shaped waveform that, in each horizontal period H, is composed of trace and retrace sinewave portions, respectively. During trace, the corresponding sinewave portion of voltage V₃ is at approximative the resonance frequency of winding L_{H} and Capacitor Cₛ that, for example, is equal to approximately 7 KHz; during retrace, the corresponding sinewave portion is at approximately 44 KHz.

Embodying another aspect of the invention, inductor L₂ and capacitance C₄ are included in a circuit branch that, during trace, is coupled in parallel with trace capacitance Cₛ. Resonance current i₃ flows, during the first half of the trace, in a direction opposite to the arrow from ground, through diode D₄ inductor L₂, capacitance C₄, capacitance Cₛ, diode D1, deflection transistor Q1 that is conductive and back to ground. FIGURE 3b shows a base current i_{B} of transistor Q1. Note that base current i_{B} is already supplied at time t₈ that is at the beginning of trace for keeping transistor Q1 in saturation. Saturated transistor Q1 provides a ground return for current i₃ during the first half of trace. Thus, conductive transistor Q1 keeps voltage V₁ at approximately zero at beginning of trace even if the magnitude of negative current i₃ that flows from diode D1 to terminal 23 is greater than that of negative current i₂ that flows from terminal 23 via winding W1 of transformer T1 to terminal 22a. During the second half of trace, current i₃ circulates in the direction of the arrow through diode D₃, capacitance Cₛ, capacitance C₄ and inductor L₂.

Deflection current i_{y} flows during retrace in a current path that includes retrace capacitor C_{RD}, deflection winding L_{H} and trace capacitor Cₛ. Trace capacitor Cₛ, that provides low impedance during retrace, causes deflection current i_{y} to be bypassed, so as to prevent current i_{y} from flowing, throughout retrace, in the branch of circuit 60 that includes capacitor C4 and inductor L₂.

Embodying a yet further aspect of the invention, because inductor L₂ is bypassed by capacitor Cₛ that is coupled in parallel, the deflection inductance during retrace and retrace voltage V₁ are, advantageously, not substantially affected by inductor L₂. In contrast, in some prior art circuits, a modulation inductor that provides inside pincushion distortion correction is serially coupled, during at least a portion of retrace, with the deflection winding; therefore such modulation inductor may, disadvantageously, cause an increase in the retrace voltage and in the deflection power dissipation. Therefore, advantageously, circuit 100 of FIGURE 1 may require a lower level of voltage B+ when operating at higher deflection frequencies, such as, for example, 2xf_{H}, than in other prior art circuits.

The amplitude of current i₃ of FIGURE 1 is modulated by voltage V₄, which is controlled by the east-west switched current arrangement 25 via current i_{L1}. At time t₁ of FIGURE 3e, at the end of trace, current i₃ flows decreasingly via a current path of FIGURE 1 that includes diode D₃, capacitance Cₛ, capacitance C₄ and inductor L₂. Voltage V₄ of FIGURE 3f starts to increase at time t₂ without influencing current i₃ of FIGURE 3e because voltage V₄ of FIGURE 1, at time t₂ of FIGURE 3f, is outside the current loop path of current i₃ of FIGURE 1.

When line scanning occurs at the top or bottom of the raster, current i₃ of FIGURE 3e decreases to zero near time t₃. When line scanning occurs at the center of the raster, current i₃ decreases to zero at a later time, near time t₄. After the zero crossing of current i₃, diode D₃ of FIGURE 1 becomes nonconductive and current i₃ starts to flow, in the direction that is opposite to the arrow, through diode D₄, inductor L₂, capacitance C₄, capacitance Cₛ and through capacitance C_{RT}. Current i₃ does not flow then in diode D1, because both diode D₁ and transistor Q1 are then nonconductive. As long as positive voltage V₄ across capacitance C_{RT} is positive it inhibits current i₃ from increasing significantly. Voltage V₄ becomes zero at times t₆ and t₇, for scanning at the center of the raster and at the top-bottom of the raster, respectively. Thus the amplitude of current i₃ depends upon both the amplitude and duration of the retrace pulse portion of voltage V₄. The retrace pulse portion of voltage V₄ is smaller and narrower at the center than at the top or bottom of the raster. Therefore, at the center of the raster, voltage V₄ produces a higher amplitude of current i₃ and a higher amount of "S"-shaping of current i_{y} than at either the top or bottom of the raster, in a manner that provides the required inside pin correction.

Diodes D₃ and D₄ isolate capacitance C_{RT} from current i₃ during the invervals t₂ - t₃ for top or bottom raster scanning and during the interval t₂ - t₄ for center raster scanning. Thereby, diodes D₃ and D₄ prevent current i₃ from adding charge to capacitance C_{RT}. Had a charge been added to capacitance C_{RT}, it might have produced an increase of voltage V₄. Such increase of voltage V₄ can reduce current i₃. The result might have been an undesirable oscillation. It should be understood that by removing diodes D₃ and D₄ and by grounding, instead, terminal 60c of inductor L₂, modified circuit 60 may provide sufficient inside pincushion correction without introducing undesirable oscillation when a small amount of inside pincushion correction is required.

FIGURE 3e illustrates the waveform of modulated current i₃ for top-bottom and center scanning examples, respectively. Note that the peak-to-peak amplitude of current i₃ for the center scanning example is higher. FIGURE 3h illustrates the waveform of parabolic voltage V₃ across trace capacitance Cₛ that is modulated by current i₃. Note that the waveform associated with the center of the raster is more steeply sloped and, therefore, contains a larger amplitude of high frequency component than the waveform associated with the top or bottom of the raster. The peak-to-peak amplitude of current i₃ that is 1.5A, in the center scanning example of Figure 3e, is large relative to that of current i_{y}. This relatively large amplitude is needed to enable capacitor Cₛ of FIGURE 1 to integrate current i₃ to sufficiently modify parabola voltage V₃ to provide the required inside pin correction.

FIGURE 3d illustrates the waveforms of deflection current i_{y} with inside and outside pincushion correction for the top-bottom and center scanning examples, respectively. At the center of the raster, the amplitude of current i_{y} is higher and the "S"-shaping of current i_{y} is more pronounced than at either the top or the bottom of the raster.

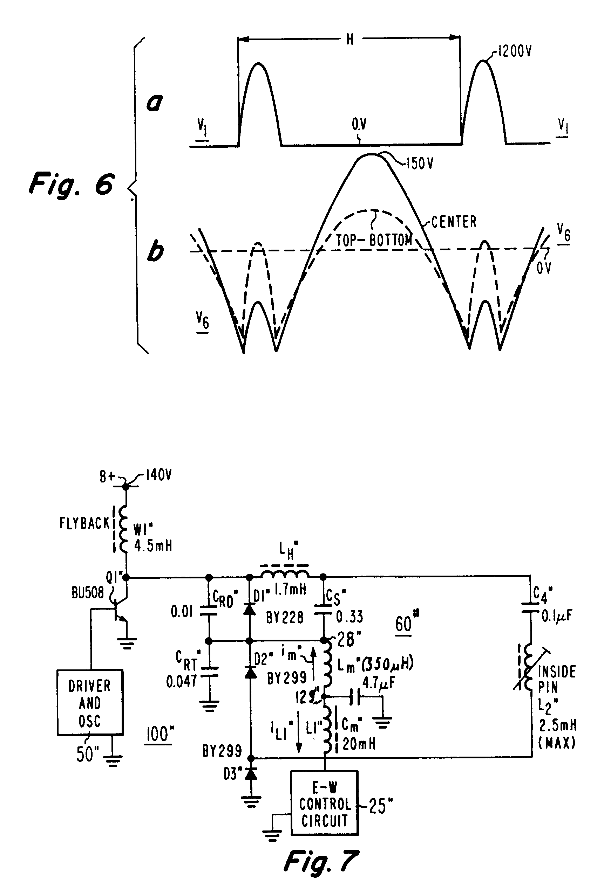

FIGURE 6b illustrates, at a horizontal rate time scale, the waveform of voltage V₆ between ground and terminal 60b, the junction of capacitance C₄ and inductor L₂. The waveform shows the resonance voltages across capacitances C₄ and Cₛ superimposed on voltage V₄.

The amount of inside pincushion correction, relative to that of outside pin correction is, advantageously, adjustable by adjusting the inductance of inductor L₂. Maximum inside pincushion correction is obtained when inductor L₂ is adjusted for obtaining maximum amplitude of current i₃ that occurs when capacitance C₄ and inductor L₂ resonate substantially at line frequency f_{H}. Increasing the inductance of inductor L₂ results in a corresponding decrease in the amplitude of current i₃ and in a lower amount of S-shaping. Parabolic voltage V₃ is at the frequency f_{H}. Therefore, current i₃ that is controlled by voltage V₃ remains at line frequency f_{H}. Preferably, inductor L₂ does not tune the resonant circuit portion of circuit 60 to resonance at frequencies higher than line frequency f_{H}. Tuning circuit 60 to resonance at a frequency higher than frequency f_{H} would add an asymmetric horizontal linearity error. The asymmetrical horizontal linearity error is caused, because, during trace, the zero crossing of current i₃ may occur, for example, prior to the center of trace and, during retrace, it may occur prior to time t₂ or t₃ of the respective waveform examples of current i₃.

E-W control circuit adjustments such as Width, Outside Parabola Amplitude or Trapeze result in a corresponding change in voltage V₄ and, advantageously, in a proportional change of in the amount of inside pincushion correction.

Diode D2, which is parallel coupled to the arrangement of diodes D₃ and D₄, may be omitted. If diode D₂ is omitted, diodes D₃ and D₄ may then be of the type which has a higher current rating such as, for example, BY 299.

Deflection circuit 100, with values and device types as shown in FIGURE 1, and providing horizontal deflection for a Philips 110° 45AX FS picture tube type A66-EAK00X01, is capable of substantially reducing E-W outside raster distortion of 9% and E-W inside raster distortion of 3%. Additionally, "mouseteeth" distortions are, advantageously, substantially reduced.

Deflection circuit 100' of FIGURE 5 embodies a further aspect of the invention. Similar numbers and symbols in FIGURES 1 and 5 indicate similar items or functions. In circuit 100' of FIGURE 5, when current i₃ flows oppositely to the direction of the arrow, during the first half of trace, current i₃ does not flow through diode D1' and transistor Q1'. Instead, it flows in a transistor Q6'. Therefore, base drive current i_{B} for transistor Q1' is not required, during the first half of trace. Transistor Q6' operates in common base configuration. Current i₃ flows during the first half of trace through inductor L₂' capacitance C₄', capacitance Cₛ' and the collector-emitter path of transistor Q6'. During the second half of trace, current i₃ flows through diode D₃', capacitance Cₛ', capacitance C₄' and inductor L₂'. Transistor Q6' clamps the low side of capacitor Cₛ' at a terminal 28' to ground during the first half of trace and suppresses visible vertical bars caused by ringing in winding W1' of the flyback transformer. In other respects, the operation of circuit 100' of FIGURE 5 is similar to that of circuit 100 of FIGURE 1.

Deflection circuit 100'' of FIGURE 7 embodies a yet further aspect of the invention. Similar numbers and symbols in FIGURES 7, 5 and 1 illustrate similar items or functions. Circuit 100'' of FIGURE.7, provides outside pincushion distortion correction similarly to a conventional diode modulator. Circuit 100'' includes a diode modulator coil Lₘ'' having one end terminal that is coupled to a terminal 28" between diodes D1'' and D2''. The other terminal of coil Lₘ'', a terminal 129'', is coupled to a choke L1'' that provides an east-west or outside pin modulation current i_{L1}'' at the vertical rate that is supplied by a control circuit 25''. A modulator trace capacitor Cₘ'' is coupled between terminal 129'' and ground. A modulator retrace capacitor C_{RT}'' and coil Lₘ'' form a retrace resonant circuit that resonates during retrace at the deflection retrace frequency that is approximately 44 KHz. A current iₘ'' in inductor Lₘ'' is at the horizontal rate. Similarly, deflection winding L_{H}'' and deflection retrace capacitor C_{RD}'' form a second retrace resonance circuit that resonates during retrace at the deflection retrace frequency as in a conventional diode modulator. Inductor Lₘ'', deflection winding L_{H}'' and capacitors C_{RD}'' and C_{RT}'' form a balanced bridge circuit such that the ratio of the inductance of deflection winding L_{H}'' to that of inductor Lₘ'' is substantially that of the ratio of capacitors C_{RT}'' and C_{RD}''.

An inside pincushion correction circuit 60'' includes the series arrangement of a capacitor C₄'' and an inductor L₂'' coupled to deflection trace capacitor Cₛ''. Circuit 60'' provides inside pincushion distortion correction in a manner similar to that discussed before with respect to the circuits of FIGURES 1 and 5. Thus, inside pincushion distortion correction circuit 60'' may be utilized in conjunction with various types of deflection and outside pincushion correction circuits to provide inside pincushion distortion correction.

## Claims

1. A deflection apparatus with inside pincushion distortion correction, comprising:
a source (50) of an input signal at a frequency that is related to a deflection rate;
means for generating, at said deflection rate, scanning current (i_{y}) in a deflection winding (L_{H}) during a trace interval and during a retrace interval of a deflection cycle, including
switching means (Q1) coupled to said deflection winding (L_{H}) and responsive to said input signal for generating, during said retrace interval, a retrace voltage and for generating said scanning current in said deflection winding during a trace interval;
a source (32) of modulation signal at a second frequency;
means (Q2, Q3, Q4, Q5) responsive to said retrace voltage and to said modulation signal for generating a modulated voltage (V₃₁) during said retrace interval that is modulated in accordance with said modulation signal;
a trace capacitance (Cₛ) coupled to said deflection winding (L_{H}) to form with said deflection winding a first trace resonant circuit during said trace interval such that said scanning current that flows in said trace capacitance develops during said trace interval a parabolic voltage in said trace capacitance;
characterized by
a circuit branch (60), including a second capacitance (C4) and a modulation inductance (L₂) coupled to said trace capacitance (Cₛ) to form a second resonant circuit forgenerating in a said modulation inductance (L₂) a modulation current at an amplitude that is modulated by said modulated voltage (V₃₁) during said retrace interval, said modulation current being coupled to said trace capacitance (Cₛ) to vary said parabolic voltage in said trace capacitance in accordance with the amplitude of said parabolic voltage in a manner to reduce inside pincushion distortion, such that said trace capacitance (Cₛ) acts as a low impedance bypass capacitance for said scanning current around said modulation inductance (L₂) substantially throughout said retrace interval.

2. An apparatus according to Claim 1 characterized in that said second resonant circuit (C₄,L₂) has a resonance frequency that is substantially higher during said trace interval than that of said first trace resonant circuit (Cₛ,L_{H}).

3. An apparatus according to Claim 1 or Claim 2 characterized in that said modulation inductance (L₂) is coupled in series with said second capacitance (C₄).

4. An apparatus according to any of Claims 1 to 3 characterized in that said modulated voltage generating means (Q2,Q3,Q4,Q5) modulates said scanning current in a manner to reduce outside pincushion distortion.

5. An apparatus according to Claim 4 characterized in that the resonance frequency of said second resonant circuit (C₄,L₂) is adjustable for establishing a required ratio between an amplitude of said modulation current that is required for obtaining inside pincushion correction and a corresponding amplitude of said scanning current that is required for obtaining outside pincushion correction.

6. An apparatus according to Claim 5 characterized in that the resonance frequency of said second resonant circuit (C₄,L₂) is adjustable for obtaining inside pincushion distortion correction without substantially affecting the modulation of said scanning current that reduces outside pincushion distortion.

7. A deflection apparatus according to any one of the preceding Claims characterized in that said circuit branch (60) is coupled in parallel with said trace capacitance (Cₛ) during said trace interval.

8. An apparatus according to any one of the preceding Claims characterized in that said deflection winding (L_{H}) is coupled in parallel with said circuit branch (60) and in parallel with said trace capacitance (Cₛ) during said trace interval.

9. A deflection apparatus according to any one of the preceding Claims characterized by first (D₃) and second (D₄) diodes, wherein said circuit branch (60) is coupled across said trace capacitance (Cₛ) via said first diode (D₃) during a first portion of said trace interval and via said second diode (D₄) during a second portion of said trace interval.

10. A deflection apparatus according to any of Claims 1 to 8 characterized by a diode (D₃) and a transistor wherein said circuit branch (60) includes a first terminal (60a) that is coupled to one plate of said trace capacitance (Cₛ) and a second terminal (28) that is coupled to the other plate of said trace capacitance (Cₛ), said second terminal (28) being coupled via said diode (D₃) during a first portion of said trace interval and via said transistor (Q5) during a second portion of said trace interval.

11. A deflection apparatus according to Claim 10 characterized in that said diode (D₃) conducts said current in said branch (60) at a first polarity and said transistor (Q5) conducts said current in said branch at the opposite polarity.

12. A deflection apparatus according to any one of the preceding Claims characterized in that said modulation and scanning currents are combined to flow in said trace capacitance (Cₛ) to develop said parabolic voltage such that, substantially throughout said trace interval, said modulation and scanning currents in said trace capacitance (Cₛ) are at the same polarities, respectively.

13. A deflection apparatus according to any one of the preceding Claims characterized by a source (90) of supply energy, a supply inductance (W1) coupled to said switching means (Q1) and said source (90) of supply energy for producing therein said retrace voltage during said retrace interval of said deflection cycle, a first retrace capacitance (C_{RD}) that forms a retrace resonant circuit (27) with said deflection winding (L_{H}) during said retrace interval of said deflection cycle, a load circuit (U) coupled to said supply inductance (W1) and energized during said retrace interval, and an impedance (L1), that at the retrace frequency of said scanning current is of substantially higher value than that of said deflection winding (L_{H}), wherein said impedance (L₁) is interposed in a current path between said retrace resonant circuit (27) and said supply inductance (W1) for reducing substantial energy transfer between said retrace resonant circuit (27) and said load circuit (U) during said retrace interval in a manner to reduce mouseteeth distortion.

14. A deflection apparatus according to Claim 13, characterized in that said impedance comprises a choke (L₁).

15. A deflection apparatus according to Claim 13 or 14 characterized in that said supply inductance comprises a primary winding (W1) of a flyback transformer (T1).

16. A deflection apparatus according to any of Claims 13 to 15 characterized by a second retrace capacitance (C_{RT}') coupled to said retrace voltage (V₁), and a second source (25) of modulation current coupled to said second retrace capacitance (C_{RT}') for controlling the voltage across said first retrace capacitance (C_{RD}') during said retrace interval to obtain outside pincushion distortion correction.

17. A deflection apparatus according to any one of the preceding Claims characterized in that said modulated voltage generating means (Q2,Q3,Q4,Q5) modulates the amplitude and duration of said modulated voltage during said retrace interval.

18. A deflection apparatus according to any of Claims 1 to 15 and 17 characterized in that said means (Q2,Q3,Q4,Q5) that generates said modulated voltage comprises a second source (25) of modulation current responsive to said modulation signal and a retrace capacitance (C_{RT}') that is coupled to said second source (25) of modulation current and to said switching means (Q1').

19. An apparatus according to any of Claims 1 to 12 and 17 characterized by a diode modulator, said diode modulator including first (C_{RD}'') and second C_{RT}'') retrace capacitances coupled to said switching means (Q1''), a second modulation inductance Lₘ'') coupled to said source (25'') of modulation signal and to said second retrace capacitance (C_{RT}'') to form with said second retrace capacitance a second resonant circuit, and first (D1'') and second (D2'') diodes coupled across said first C_{RD}'') and second (C_{RT}'') retrace resonant circuits, respectively.

20. A deflection apparatus according to any one of the preceding Claims characterized in that said input signal is at a horizontal scanning frequency and wherein said modulation signal is at a vertical scanning frequency.

21. A deflection apparatus according to any one of the preceding Claims characterized in that said modulation inductance (L₂) is adjustable for controlling the modulation depth of said current in said circuit branch (60) so as to obtain inside pincushion distortion reduction that is required without substantially affecting the modulation of said scanning current that provides the outside pincushion distortion reduction that is required.

22. A deflection apparatus according to Claim 21 characterized in that the resonance frequency of said second resonant circuit (C₄,L₂) is tuned by said modulation inductance (L₂) to a frequency that is lower than or equal to said deflection rate.

23. A deflection apparatus according to any one of the preceding Claims characterized in that said switching means (Q1) generates said retrace voltage (V₁) at a terminal (23) thereof and wherein said trace capacitance (Cₛ) isolates said modulation inductance (L₂) from said terminal (23) of said switching means (Q1) during said retrace interval to prevent said modulation inductance (L₂) from affecting an amplitude of said retrace voltage (V₁).

## Patentansprüche

1. Ablenkeinrichtung mit innerer Kissenverzerrungs-Korrektur, welche aufweist:
- eine Quelle (50) für ein Eingangssignal mit einer Frequenz, die Bezug zur Ablenkrate hat;
- Mittel zum Erzeugen eines Abtaststromes (i_{y}) mit der Ablenkrate in einer Ablenkwicklung (L_{H}) während eines Hinlauf-Intervalls und während eines Rücklauf-Intervalls eines Ablenkzyklusses, welche beinhalten:
- Schaltmittel (Q1), die mit der Ablenkwicklung (L_{H}) gekoppelt sind und abhängig sind von dem Eingangssignal zum Erzeugen einer Rücklauf-Spannung - während des Rücklauf-Intervalls - und zum Erzeugen des Abtaststromes in der Ablenkwicklung - während eines Hinlauf-Intervalls -;
- eine Quelle (32) eines Modulationssignals mit einer zweiten Frequenz;
- Mittel (Q2, Q3, Q4, Q5), die abhängig sind von der Rücklauf-Spannung und dem Modulationssignal zum Erzeugen einer modulierten Spannung (V₃₁) während des Rücklauf-Intervalls, das in Übereinstimmung mit dem Modulationssignal moduliert wird;
- eine Hinlauf-Kapazität (Cₛ), die mit der Ablenkwicklung (L_{H}) gekoppelt ist, um mit ihr einen ersten Hinlauf-Resonanzkreis während des Hinlauf-Intervalls so zu bilden, daß der Abtaststrom, der in der Hinlauf-Kapazität fließt, während des Hinlauf-Intervalls eine Parabelspannung in der Hinlauf-Kapazität bildet;
**gekennzeichnet durch**
einen Schaltungszweig (60), der eine zweite Kapazität (C₄) und eine Modulations-Induktivität (L₂) aufweist, die mit der Hinlauf-Kapazität (Cₛ) gekoppelt ist, um einen zweiten Resonanzkreis zum Erzeugen eines Modulationsstroms in der Modulations-Induktivität (L₂) zu bilden;
- wobei der Modulationsstrom eine Amplitude hat, die von der modulierten Spannung (V₃₁) während des Rücklauf-Intervalls moduliert wird, wobei der Modulationsstrom zu der Hinlauf-Kapazität (Cₛ) gekoppelt ist/wird, um die Parabelspannung in/an der Hinlauf-Kapazität in Übereinstimmung mit der Amplitude der Parabelspannung zu variieren, und zwar in einer Weise, mit der die innere Kissenverzerrung (inside pincushion distortion) so reduziert wird, daß die Hinlauf-Kapazität (Cₛ) eine Bypass-Kapazität mit geringer Impedanz für den Abtaststrom (scanning current) um die Modulations-Induktivität (L₂) während im wesentlichen des gesamten Rücklauf-Intervalls bildet.

2. Einrichtung nach Anspruch 1,
**dadurch gekennzeichnet**,
daß der zweite Resonanzkreis (C₄, L₂) eine Resonanzfrequenz hat, die wesentlich höher während des Hinlauf-Intervalls ist, als die des ersten Hinlauf-Resonanzkreises (Cₛ, L_{H}).

3. Einrichtung nach Anspruch 1 oder 2,
**dadurch gekennzeichnet,**
daß die Modulations-Induktivität (L₂) mit der zweiten Kapazität (C₄) in Serie gekoppelt (geschaltet) ist.

4. Einrichtung nach einem der vorhergehenden Ansprüche,
**dadurch gekennzeichnet,**
daß die Mittel (Q2, Q3, Q4, Q5) zur Erzeugung der modulierten Spannung den Abtaststrom so modulieren, daß äußere Kissenverzerrung (outside pincushion distortion) reduziert wird.

5. Einrichtung nach Anspruch 4,
**dadurch gekennzeichnet,**
daß die Resonanzfrequenz des zweiten Resonanzkreises (C₄,L₂) abgleichbar ist zum Bilden eines erforderlichen Verhältnisses zwischen einer Amplitude des Modulationsstromes, die benötigt wird zum Erreichen der inneren Kissenverzerrungskorrektur und einer korrespondierenden Amplitude des Abtaststromes, der erforderlich ist für das Erreichen der äußeren Kissenverzerrungskorrektur.

6. Einrichtung nach Anspruch 5,
**dadurch gekennzeichnet**,
daß die Resonanzfrequenz des zweiten Resonanzkreises (C₄,L₂) abgleichbar ist zum Erreichen innerer Kissenverzerrungskorrektur ohne im wesentlichen die Modulation des Abtaststromes zu beeinflussen, der die äußere Kissenverzerrung reduziert.

7. Ablenkeinrichtung nach einem der vorhergehenden Ansprüche,
**dadurch gekennzeichnet**,
daß der Schaltungszweig (60) während des Hinlauf-Intervalls parallel zu der Hinlauf-Induktivität gekoppelt ist.

8. Einrichtung nach einem der vorhergehenden Ansprüche,
**dadurch gekennzeichnet**,
daß die Ablenkwicklung (L_{H}) während des Hinlauf-Intervalls parallel zu dem Schaltungszweig (60) und parallel zu der Hinlauf-Kapazität (Cₛ) gekoppelt ist.

9. Ablenkeinrichtung nach einem der vorhergehenden Ansprüche, **gekennzeichnet durch**
erste (D₃) und zweite (D₄) Dioden, wobei der Schaltungszweig (60) an die (parallel zur) Hinlauf-Kapazität (Cₛ) über die erste Diode (D₃) während eines ersten Teils/Abschnitts des Hinlauf-Intervalls und über die zweite Diode (D₄) während eines zweiten Teils/Abschnitts des Hinlauf-Intervalls gekoppelt ist.

10. Ablenkeinrichtung nach einem der Ansprüche 1 bis 8,
**gekennzeichnet durch**
eine Diode (D₃) und einen Transistor, wobei der Schaltungszweig (60) einen ersten Anschluß (60a), der an die eine Platte/Fläche, und einen zweiten Anschluß (28) aufweist, der an die andere Platte/Fläche der Hinlauf-Kapazität (Cₛ) gekoppelt ist, wobei der zweite Anschluß (28) über die Diode (D₃) während eines ersten Teils/Abschnitts des Hinlauf-Intervalls und über den Transistor (Q5) während eines zweiten Teils/Abschnitts des Hinlauf-Intervalls gekoppelt ist/wird.

11. Ablenkeinrichtung nach Anspruch 10,
**dadurch gekennzeichnet**,
daß die Diode (D₃) den Strom in dem Zweig (60) mit einer ersten Polarität führt/leitet und der Transistor (Q5) den Strom in dem Zweig bei entgegengesetzter Polarität leitet/führt.

12. Ablenkeinrichtung nach einem der vorhergehenden Ansprüche,
**dadurch gekennzeichnet**,
daß die Modulations- und Abtastströme kombiniert werden, um in der Hinlauf-Kapazität (Cₛ) zu fließen, zum Bilden der Parabelspannung so, daß während des im wesentlichen ganzen Hinlauf-Intervalls die Modulations- und Abtastströme in der Hinlauf-Kapazität (Cₛ) jeweils dieselbe Polarität haben.

13. Ablenkeinrichtung nach einem der vorhergehenden Ansprüche, **gekennzeichnet durch**
eine Quelle (90) von Versorgungsenergie, eine Versorgungs-Induktivität (W1), die mit den Schaltmitteln (Q1) und der Quelle (90) von Versorgungsenergie gekoppelt ist, zum Erzeugen der Rücklauf-Spannung darin während des Rücklauf-Intervalls des Ablenkzyklusses, eine erste Rücklauf-Kapazität (C_{RD}), die einen Rücklauf-Resonanzkreis (27) mit der Ablenkwicklung (L_{H}) während des Rücklauf-Intervalls des Ablenkzyklusses bildet, eine Lastschaltung (U), die mit der Versorgungs-Induktivität (W1) gekoppelt ist und stromführend wird während des Rücklauf-Intervalls, und eine Impedanz (L₁), die bei der Rücklauf-Frequenz des Abtaststromes von wesentlich höherem Wert ist, als dem der Ablenkwicklung (L_{H}), wobei die Impedanz (L₁) in einen Strompfad zwischen dem Rücklauf-Resonanzkreis (27) und der Versorgungs-Induktivität (W1) eingeschaltet ist, zum Reduzieren wesentlichen Energietransfers zwischen dem Rücklauf-Resonanzkreis (27) und der Lastschaltung (U) während des Rücklauf-Intervalls in einer Weise, die Mäusezahn-Verzerrung (mouseteeth distortion) reduziert.

14. Ablenkeinrichtung nach Anspruch 13,
**dadurch gekennzeichnet**,
daß die Impedanz eine Drossel (L₁) aufweist/ist.

15. Ablenkeinrichtung nach Anspruch 13 oder 14,
**dadurch gekennzeichnet,**
daß die Versorgungs-Induktivität eine Primärwicklung (W1) eines Sperrwandler-Transformators (T1) aufweist.

16. Ablenkeinrichtung nach einem der Ansprüche 13 bis 15,
**gekennzeichnet durch**
eine zweite Rücklauf-Kapazität (C_{RT}'), die mit der Rücklauf-Spannung (V₁) gekoppelt ist, und eine zweite Quelle (25) von Modulationsstrom, die/der an die zweite Rücklauf-Kapazität (C_{RT}') gekoppelt ist, zum Steuern der Spannung über/an der ersten Rücklauf-Kapazität (C_{RD}') während des Rücklauf-Intervalls, um äußere Kissenverzerrungs-Korrektur zu erreichen.

17. Ablenkeinrichtung nach einem der vorhergehenden Ansprüche, **dadurch gekennzeichnet,**
daß die Mittel (Q2, Q3, Q4, Q5) zum Erzeugen der modulierten Spannung die Amplitude und Dauer der modulierten Spannung während des Rücklauf-Intervalls modulieren.

18. Ablenkeinrichtung nach einem der Ansprüche 1 bis 15 und/oder 17,
**dadurch gekennzeichnet,**
daß die Mittel (Q2, Q3, Q4, Q5), die die modulierte Spannung erzeugen, eine zweite Quelle (25) von Modulationsstrom, die/der abhängig von dem Modulationssignal sind/ist, und eine Rücklauf-Kapazität (C_{RT}') aufweisen, die mit der zweiten Quelle (25) von Modulationsstrom und mit den Schaltmitteln (Q1') gekoppelt ist.

19. Einrichtung nach einem der Ansprüche 1 bis 12 und/oder 17, **gekennzeichnet durch**
einen Diodenmodulator, der aufweist: erste (C_{RD}'') und zweite (C_{RT}'') Rücklauf-Kapazitäten, die mit den Schaltmitteln (Q1'') gekoppelt sind, eine zweite Modulations-Induktivität (Lₘ''), die mit der Quelle (25'') des Modulatiossignales und der zweiten Rücklauf-Kapazität (C_{RT}'') gekoppelt ist, um mit der zweiten Rücklauf-Kapazität einen zweiten Resonanzkreis zu bilden, und erste (D1'') bzw. zweite (D2'') Dioden, die (parallel) zu dem ersten (C_{RD}'') bzw. zweiten (C_{RT}'') Rücklauf-Resonanzkreis gekoppelt sind.

20. Ablenkeinrichtung nach einem der vorhergehenden Ansprüche,
**dadurch gekennzeichnet,**
daß das Eingangssignal die Horizontal-Abtastfrequenz aufweist und bei der das Modulationssignal die Vertikal-Abtastfrequenz hat.

21. Ablenkeinrichtung nach einem der vorhergehenden Ansprüche,
**dadurch gekennzeichnet,**
daß die Modulations-Induktivität (L₂) abgleichbar bzw. einstellbar ist zum Steuern der Modulationstiefe des Stromes in dem Schaltungszweig (60), so daß die - ohne wesentliche Beeinflussung der Modulation des Abtaststromes - erforderliche innere Kissenverzerrungs-Reduktion erreicht wird, welcher (Abtaststrom) die - erforderliche - äußere Kissenverzerrungs-Korrektur bewirkt.

22. Ablenkeinrichtung nach Anspruch 21,
**dadurch gekennzeichnet,**
daß die Resonanzfrequenz des zweiten Resonanzkreises (C₄,L₂) von der Modulations-Induktivität (L₂) abgestimmt wird, und zwar auf eine Frequenz, die unterhalb oder gleich der Ablenkrate liegt/ist.

23. Ablenkeinrichtung nach einem der vorhergehenden Ansprüche,
**dadurch gekennzeichnet,**
daß die Schaltmittel (Q1) die Rücklaufspannung (V₁) an einem Anschluß (23) von ihnen erzeugen und wobei die Hinlauf-Kapazität (Cₛ) die Modulations-Induktivität (L₂) von dem Anschluß (23) der Schaltmittel (Q1) während des Rücklauf-Intervalls isoliert, um die Modulations-Induktivität (L₂) daran zu hindern, eine Amplitude der Rücklaufspannung (V₁) zu beeinflussen.

## Revendications

1. Dispositif de déflexion avec correction de distorsion en coussin intérieur comprenant :
une source (50) d'un signal d'entrée à une fréquence qui est reliée à une vitesse de déflexion ;
des moyens pour générer , à ladite vitesse de déflexion, le courant de balayage (i_{y}) dans un enroulement de déflexion (L_{H}) pendant un intervalle de tracé et pendant un intervalle de retour d'un cycle de déflexion, incluant
des moyens de commutation (Q1) couplés audit enroulement de déflexion (L_{H}) et sensibles audit signal d'entrée pour générer, pendant ledit intervalle de retour, une tension de retour et pour générer ledit courant de balayage dans ledit enroulement de déflexion pendant un intervalle de retour ;
une source (32) du signal de modulation à une seconde fréquence ;
des moyens (Q2, Q3, Q4, Q5) sensibles à ladite tension de retour et audit signal de modulation pour générer une tension modulée (V₃₁) pendant ledit intervalle de retour qui est modulée selon ledit signal de modulation ;
un condensateur de tracé (Cₛ) couplé audit enroulement de déflexion (L_{H}) pour former avec ledit enroulement de déflexion un premier circuit résonnant de tracé pendant ledit intervalle de tracé de telle sorte que ledit courant de balayage qui circule dans ledit condensateur de tracé développe, pendant ledit intervalle de tracé, une tension parabolique dans ledit condensateur de tracé ;
caractérisé par
une branche de circuit (60) , incluant un second condensateur (C4) et une inductance de modulation (L₂) couplés audit condensateur de tracé (Cₛ) pour former un second circuit résonnant afin de générer dans ladite inductance de modulation (L₂) un courant de modulation à une amplitude qui est modulée par ladite tension modulée (V₃₁) pendant ledit intervalle de retour, ledit courant de modulation étant couplé audit condensateur de tracé (Cₛ) pour modifier ladite tension parabolique dans ledit condensateur de tracé selon l'amplitude de ladite tension parabolique de manière à réduire la distorsion en coussin intérieur, de telle sorte que ledit condensateur de tracé (Cₛ) agit comme un condensateur de dérivation de faible impédance pour ledit courant de balayage autour de ladite inductance de modulation (L₂) sensiblement tout au long de l'intervalle de retour.

2. Dispositif selon la revendication 1 caractérisé en ce que ledit second circuit résonnant (C₄, L₂) possède une fréquence de résonance qui est sensiblement plus élevée pendant ledit intervalle de tracé que celle dudit premier circuit résonnant de tracé (Cₛ, L_{H}).

3. Dispositif selon la revendication 1 ou la revendication 2, caractérisé en ce que ladite inductance de modulation (L₂) est couplée en série avec ledit second condensateur (C₄).

4. Dispositif selon l'une quelconque des revendications 1 à 3 caractérisé en ce que lesdits moyens de génération de tension modulée (Q2, Q3, Q4, Q5) modulent ledit courant de balayage de manière à réduire la distorsion en coussin extérieur.

5. Dispositif selon la revendication 4 caractérisé en ce que la fréquence de résonance dudit second circuit résonnant (C₄, L₂) est réglable pour établir le rapport requis entre une amplitude dudit courant de modulation qui est requise pour obtenir une correction de coussin intérieur et une amplitude corespondante dudit courant de balayage qui est requise pour obtenir une correction de coussin extérieur.

6. Dispositif selon la revendication 5 caractérisé en ce que la fréquence de résonance dudit second circuit résonnant (C₄, L₂) est réglable pour obtenir une correction de distorsion en coussin intérieur sans affecter sensiblement la modulation dudit courant de balayage qui réduit la distorsion en coussin extérieur.

7. Dispositif de déflexion selon l'une quelconque des revendications précédentes caractérisé en ce que ladite branche de circuit (60) est couplée en parallèle avec ledit condensateur de tracé (Cₛ) pendant ledit intervalle de tracé.

8. Dispositif selon l'une quelconque des revendications précédentes caractérisé en ce que ledit enroulement de déflexion (L_{H}) est couplé en parallèle avec ladite branche de circuit (60) et en parallèle avec ledit condensateur de tracé (Cₛ) pendant ledit intervalle de tracé.

9. Dispositif de déflexion selon l'une quelconque des revendications précédentes caractérisé par les première (D₃) et seconde (D₄) diodes, dans lequel ladite branche de circuit (60) est couplée à travers ledit condensateur de tracé (Cₛ) via ladite première diode (D₃) pendant une première partie dudit intervalle de tracé et via ladite seconde diode (D₄) pendant une seconde partie dudit intervalle de tracé.

10. Dispositif de déflexion selon l'une quelconque des revendications 1 à 8 caractérisé par une diode (D₃) et un transistor dans lequel ladite branche de circuit (60) inclut une première borne (60a) qui est couplée à une plaque dudit condensateur de tracé (Cₛ) et une seconde borne (28) qui est couplée à l'autre plaque dudit condensateur de tracé (Cₛ),ladite seconde borne (28) étant couplée via ladite diode (D₃) pendant une première partie dudit intervalle de tracé via ledit transistor (Q5) pendant une seconde partie dudit intervalle de tracé.

11. Dispositif de déflexion selon la revendication 10 caractérisé en ce que ladite diode (D₃) conduit ledit courant dans ladite branche (60) à une première polarité et ledit transistor (Q5 conduit ledit courant dans ladite branche à la polarité opposée.

12. Dispositif de déflexion selon l'une quelconque des revendications précédentes caractérisé en ce que lesdits courants de modulation et de balayage sont combinés pour circuler dans ledit condensateur de tracé (Cₛ) pour développer ladite tension parabolique de telle sorte que, sensiblement tout au long dudit intervalle de tracé, lesdits courants de modulation et de balayage dans ledit condensateur de tracé (Cₛ) sont, respectivement, aux mêmes polarités.

13. Dispositif de déflexion selon l'une quelconque des revendications précédentes caractérisé par une source (90) d'alimentation en énergie, une inductance d'alimentation (W1) couplée auxdits moyens de commutation (Q1) et à ladite source (90) d'alimentation en énergie pour y produire ladite tension de retour pendant ledit intervalle de retour dudit cycle de déflexion, un premier condensateur de retour (C_{RD}) qui forme un premier circuit résonnant de retour (27) avec ledit enroulement de déflexion (L_{H}) pendant ledit intervalle de retour dudit cycle de déflexion, un circuit de charge (U) couplé à ladite inductance d'alimentation (W1) et activé pendant ledit intervalle de retour et une impédance (L1), qui à la fréquence de retour dudit courant de balayage est de valeur sensiblement supérieure à celle dudit enroulement de déflexion (L_{H}), dans lequel ladite impédance (L1) est intercalée dans le parcours du courant entre ledit circuit résonnant de retour (27) et ladite inductance d'alimentation (W1) pour réduire le transfert d'énergie important entre ledit circuit résonnant de retour (27) et ledit circuit de charge (U) pendant ledit intervalle de retour de manière à réduire la distorsion en crénelure.

14. Dispositif de déflexion selon la revendication 13, caractérisé en ce que ladite impédance comprend une bobine de self (L1).

15. Dispositif de déflexion selon la revendication 13 ou 14 caractérisé en ce que ladite inductance d'alimentation comprend un enroulement primaire (W1) d'un transformateur de retour de balayage (T1).

16. Dispositif de déflexion selon l'une quelconque des revendications 13 à 15, caractérisé par un second condensateur de retour (C_{RT}') couplé à ladite tension de retour (V'₁) et une seconde source (25) de courant de modulation couplée audit second condensateur de retour (C_{RT}') afin de commander la tension à travers ledit premier condensateur de retour (C_{RD}') pendant ledit intervalle de retour pour obtenir la correction de distorsion en coussin extérieur.

17. Dispositif de déflexion selon l'une quelconque des revendications précédentes caractérisé en ce que lesdits moyens pour générer une tension modulée (Q2, Q3, Q4, Q5) modulent l'amplitude et la durée de ladite tension modulée pendant ledit intervalle de retour.

18. Dispositif de déflexion selon l'une quelconque des revendications 1 à 15 et 17 caractérisé en ce que lesdits moyens (Q2, Q3, Q4, Q5) qui génèrent ladite tension modulée comprennent une seconde source (25) de courant de modulation sensible audit signal de modulation et un condensateur de retour (C_{RT}') qui est couplé à ladite seconde source (25) de courant de modulation et auxdits moyens de commutation (Q'₁).

19. Dispositif de déflexion selon l'une quelconque des revendications 1 à 12 et 17, caractérisé par un modulateur à diode, ce dernier incluant des premier (C_{RD}'') et second (C_{RT}'') condensateurs de retour couplés auxdits moyens de commutation (Q1'') , une seconde inductance de modulation (Lₘ'') couplée à ladite source (25'') du signal de modulation et audit second condensateur de retour (C_{RT}'') pour former avec ledit second condensateur de retour un second circuit résonnant et des première (D1'') et seconde (D2'') diodes couplées respectivement à travers lesdits premier (C_{RD}'') et second (C_{RT}'') circuits résonnants de retour.

20. Dispositif de déflexion selon l'une quelconque des revendications précédentes caractérisé en ce que ledit signal d'entrée est à une fréquence de balayage horizontal et dans lequel ledit signal de modulation est à une fréquence de balayage vertical.

21. Dispositif de déflexion selon l'une quelconque des revendications précédentes caractérisé en ce que ladite inductance de modulation (L₂) est réglable pour commander le taux de modulation dudit courant dans ladite branche de circuit (60) de façon à obtenir une réduction de distorsion en coussin intérieur qui est requise sans affecter sensiblement la modulation dudit courant de balayage qui fournit la réduction requise de distorsion en coussin extérieur.

22. Dispositif de déflexion selon la revendication 21, caractérisé en ce que la fréquence de résonance dudit second circuit résonnant (C₄,L₂) est accordée par ladite inductance de modulation (L₂) à une fréquence qui est inférieure ou égale à ladite fréquence de déviation.

23. Dispositif de déflexion selon l'une quelconque des revendications précédentes caractérisé en ce que lesdits moyens de commutation (Q1) génèrent ladite tension de retour (V₁) à sa borne (23) et dans lequel ledit condensateur de tracé (Cₛ) isole ladite inductance de modulation (L₂) de ladite borne (23) desdits moyens de commutation (Q1) pendant ledit intervalle de retour pour éviter à ladite inductance de modulation (L₂) d'affecter l'amplitude de ladite tension de retour (V₁).
